# EUROPEAN PATENT APPLICATION

(11) **EP 1 533 925 A2**
(43) Date of publication of application: **25.05.2005**
(21) Application number: 04027532.3
(22) Date of filing: 19.11.2004
(51) Int. Cl.: H04J 3/06, H04N 7/24, H04B 7/212

(54) **Synchronization of a stream data communication system**

(30) Priority: 19.11.2003 JP 2003389724
(71) Applicant: Pioneer Corporation, Meguro-ku, Tokyo (JP)
(72) Inventor: Nakamura, Hiroshi, c/o Pioneer Corporation, Tokorozawa-shi, Saitama (JP)
(74) Representative: Reinhard - Skuhra - Weise & Partner GbR

(57) **Abstract**

A stream data communication system includes a stream data transmitter and a stream data receiver. The stream data transmitter includes: a first reference waveform receiving unit that receives a reference waveform; a first reference clock generation unit that generates a first reference clock based on the reference waveform; and a stream data transmitting unit that transmits the stream data to the stream data receiver based on the first reference clock. The stream data receiver includes: a second reference waveform receiving unit that receives the reference waveform; a second reference clock generation unit that generates a second reference clock based on the reference waveform; a stream data receiving unit that receives the stream data; and a stream data decoder that decodes the stream data based on the second reference clock.

## Description

The present disclosure relates to the subject matter contained in Japanese Patent Application No. 2003-389724 filed on November 19, 2003, which is incorporated herein by reference in its entirety.

### BACKGROUND OF THE INVENTION

### Field of the Invention

The present invention relates to a stream data communication system and a stream data communication method for transmitting and receiving the stream data.

### Description of the Related Art

Conventionally, in the digital CS (Communications Satellite) broadcasting or digital BS (Broadcasting Satellite) broadcasting, an AV signal for broadcasting is encoded by the MPEG (Moving Picture Experts Group) 2 method and multiplexed in time division to generate an MPEG 2 transport stream (hereinafter referred to as MPEG2-TS) which is distributed as data.

The MPEG2-TS consists of a PES (Packetized Elementary Stream) packet of variable length produced by dividing video data or audio data into meaningful units. A header part of the PES packet records the kind of stream, length of packet, and time information such as PTS (Present Time Stamp) indicating the reference time and DTS (Decode Time Stamp) indicating the decoding time.

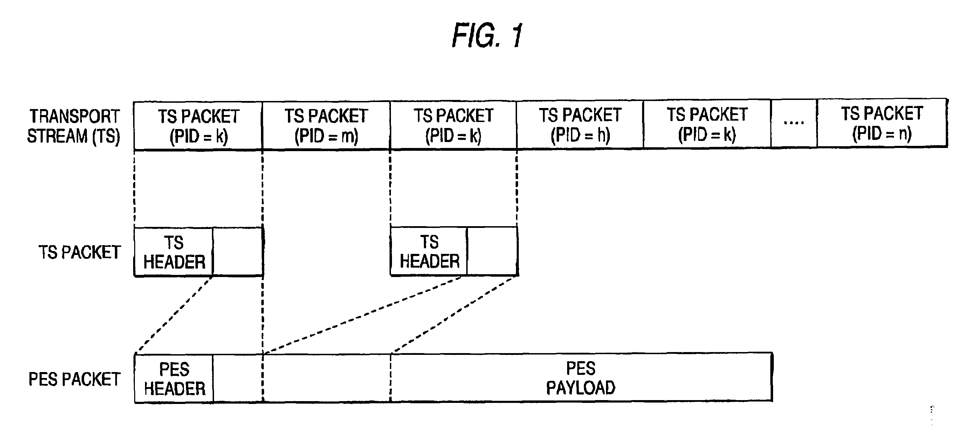

In the MPEG2-TS, the PES packet is further divided into TS (Transport Stream) packets having a fixed length of 188 bytes, and distributed via a transmission path, as shown in FIG. 1. Each TS packet has a PID (Packet Identification) value for distinguishing the packet information divided from the PES packet for each PES packet, whereby the receiving side reproduces the PES packet based on the PID value, in the received TS packet.

In these TS packets, a PCR (Program Clock Reference) indicating the reference time information is appended. The PCR is the time stamp for synchronizing an STC (System Time Clock) within the transmitter for transmitting the TS packet and an STC within the receiver for receiving the transmitted TS packet, and placed within the MPEG2-TS at every 100 milliseconds or less. More specifically, the PCR may be added to the existent TS packet, or to the MPEG2-TS by placing the TS packet (PCR packet) dedicated for PCR between packets.

Generally, in the data transmission with the MPEG system, it is required that a delay time from the encoder input on the transmitting side to the decoder output on the receiving side is constant. Accordingly, in the BS digital broadcasting or CS digital broadcasting system in which there are no variation factors regarding the data transmission delay, the receiver extracts the PCR from the MPEG2-TS transmitted from the transmitter, regenerates the STC based on the extracted PCR, and decodes, reproduces and displays the packet at the time indicated by the PTS and DTS in each PES packet with reference to the regenerated STC.

However, in the system such as the Internet in which the data transmission delay time is not constant but varies irregularly, that is, an asynchronous communication network in which there is necessarily a delay fluctuation, the STC on the receiver side fluctuates irregularly, causing several problems with the skewed output to degrade the reproduced image.

In order to solve these problems, a solution has been offered in which a buffer is prepared at the former stage of a decoder to adjust the transfer rate to the decoder in accordance with the received PCR value to absorb the delay fluctuation (e.g., refer to JP-A-11-177653).

Also, a method has been offered in which a time error modification device is provided on the receiver side to absorb the delay fluctuation, employing the time error modification device (e.g., refer to JP-A-2002-152273).

### SUMMARY OF THE INVENTION

However, a PCR fluctuation caused by delay fluctuation can not be fully removed only by increasing or decreasing the transfer rate as described in JP-A-11-177653, and it is required that a dedicated circuit for the decoder is added, whereby the above solution can not be directly applied to the existent decoder.

Moreover, in the time error modification device as described in JP-A-2002-152273, the circuit structure is very complex, and even when the time error modification device is employed, it is difficult to fully remove the delay fluctuation.

It is one of objects of the invention to fully remove the delay fluctuation occurring in the asynchronous data communication system, though it was conventionally difficult.

According to a first aspect of the invention, there is provided a stream data transmitter for transmitting stream data to a receiver, the stream data transmitter including: a reference waveform receiving unit that receives a reference waveform in which the receiver receives; a reference clock generation unit that generates a reference clock based on the reference waveform, the reference clock being in synchronism with a reference clock in which the receiver generates; and a stream data transmitting unit that transmits the stream data via an asynchronous communication network to the receiver, based on the reference clock generated by the reference clock generation unit.

According to a second aspect of the invention, there is provided a stream data receiver for receiving stream data from a transmitter, the stream data receiver including: a reference waveform receiving unit that receives a reference waveform in which the transmitter receives; a reference clock generation unit that generates a reference clock based on the reference waveform, the reference clock being in synchronism with a reference clock in which the transmitter generates; a stream data receiving unit that receives the stream data via an asynchronous communication network from the transmitter; and a stream data decoder that decodes the stream data received by the stream data receiving unit based on the reference clock generated by the reference clock generation unit.

According to a third aspect of the invention, there is provided a stream data communication system including a stream data transmitter and a stream data receiver, both of which being communicably connected with each other via an asynchronous communication network, wherein the stream data transmitter includes: a first reference waveform receiving unit that receives a reference waveform; a first reference clock generation unit that generates a first reference clock based on the reference waveform; and a stream data transmitting unit that transmits the stream data via the asynchronous communication network to the stream data receiver, based on the first reference clock generated by the first reference clock generation unit, and wherein the stream data receiver includes: a second reference waveform receiving unit that receives the reference waveform; a second reference clock generation unit that generates a second reference clock based on the reference waveform, the second reference clock being in synchronism with the first reference clock; a stream data receiving unit that receives the stream data via the asynchronous communication network from the stream data transmitting unit; and a stream data decoder that decodes the stream data received by the stream data receiving unit based on the second reference clock generated by the second reference clock generation unit.

According to a fourth aspect of the invention, there is provided a stream data communication method for transmitting and receiving stream data between a stream data transmitter and a stream data receiver that are communicably connected with each other via an asynchronous communication network, the method including: receiving a reference waveform in the stream data transmitter; generating a first reference clock based on the reference waveform in the stream data transmitter; receiving the reference waveform in the stream data receiver; generating a second reference clock based on the reference waveform in the stream data receiver, the second reference clock being in synchronism with the first reference clock; generating the stream data from data based on the first reference clock in the stream data transmitter; transmitting the stream data from the stream data transmitter to the stream data receiver via the asynchronous communication network; and reproducing the data from the stream data based on the second reference clock in the stream data receiver.

According to a fifth aspect of the invention, there is provided a stream data transmitting method for transmitting stream data to a receiver, the method including: receiving a reference waveform in which the receiver receives; generating a reference clock based on the reference waveform, the reference clock being in synchronism with a reference clock in which the receiver generates; and transmitting the stream data via an asynchronous communication network to the receiver, based on the reference clock.

According to a sixth aspect of the invention, there is provided a stream data receiving method for receiving stream data from a transmitter, the method including: receiving a reference waveform in which the transmitter receives; generating a reference clock based on the reference waveform, the reference clock being in synchronism with a reference clock in which the transmitter generates; receiving the stream data via an asynchronous communication network from the transmitter; and decoding the stream data based on the reference clock.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a schematic diagram showing the relationship between TS packet and PES packet;
Fig. 2 is a block diagram showing the overall configuration of a stream data communication system according to an embodiment of the invention;
Fig. 3 is a block diagram showing the details of the stream data communication system according to the embodiment;
Fig. 4 is a block diagram showing the overall configuration of the stream data communication system according to the embodiment;
Fig. 5 is a block diagram showing the configuration of a stream data transmitter according to the embodiment; and
Fig. 6 is a block diagram showing the configuration of a stream data receiver according to the embodiment.

### DETAILED DESCRIPTION OF THE PREFERRED EMBODIMENTS

The preferred embodiments of a stream data communication system according to the present invention will be described below with reference to the accompanying drawings.

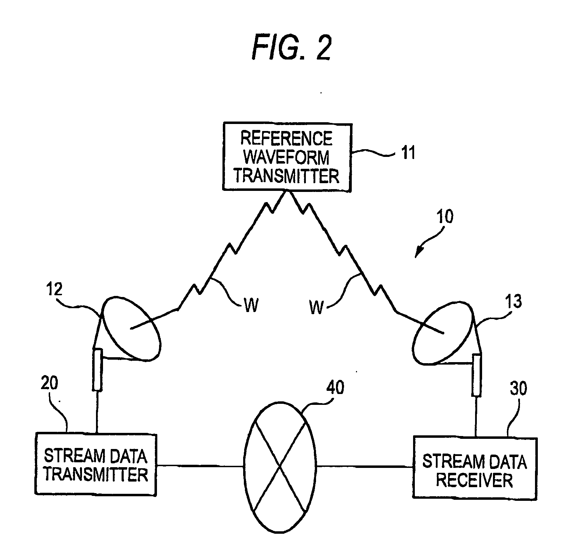

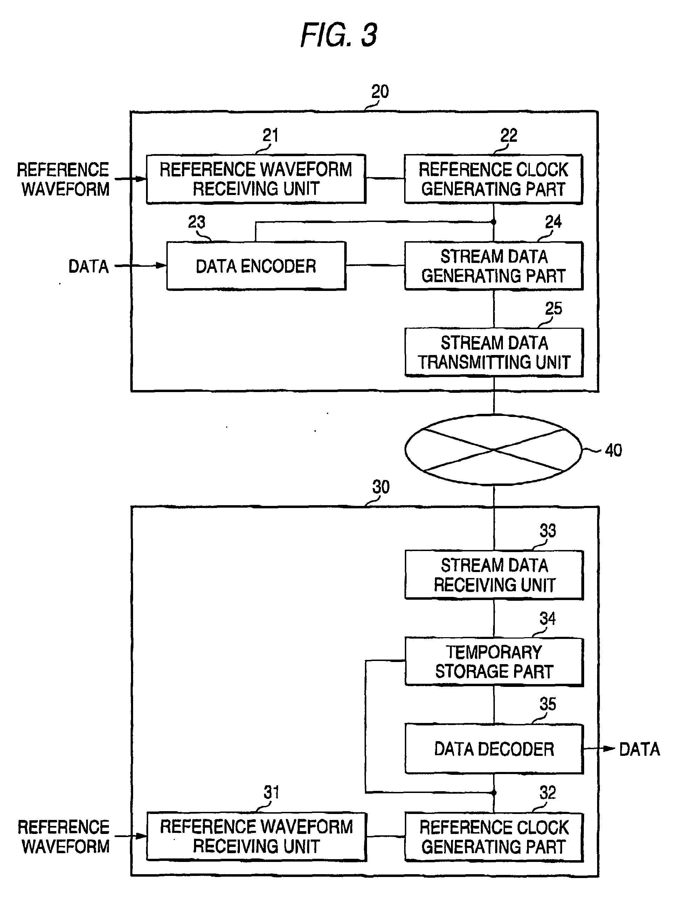

Fig. 2 is a block diagram showing the overall configuration of a stream data communication system according to an embodiment of the invention. Fig. 3 is a block diagram showing the details of the stream data communication system according to the embodiment.

The stream data communication system 10 of the embodiment comprises a stream data transmitter 20, and a stream data receiver 30 connected communicably to the stream data transmitter 20 via an asynchronous communication network 40, as shown in Fig. 2. Herein, the "asynchronous communication network" means the communication network in which both the transmitting side and the receiving side exchange data at separate timings, as represented by the Internet communication network.

The stream data transmitter 20 receives a reference waveform W transmitted from a reference waveform transmitter 11 at a transmitter side antenna 12, and the stream data receiver 30 receives a reference waveform W transmitted from the reference waveform transmitter 11 at a receiver side antenna 13. Thereby, the stream data transmitter 20 and the stream data receiver 30 can receive the reference waveform W independently and simultaneously.

The reference waveform W transmitted from the reference waveform transmitter 11 is the radio wave for generating the STC synchronized in the stream data transmitter 20 and the stream data receiver 30, and the application examples may include BS digital broadcasting radiowave, CS digital broadcasting radiowave, digital terrestrial TV broadcasting radiowave, analog TV broadcasting radiowave, radiowave provided by the communications satellite, or AM or FM radio broadcasting radiowave.

As shown in Fig. 3, the stream data transmitter 20 includes a reference waveform receiving unit 21 for receiving the reference waveform W transmitted from the reference waveform transmitter 11, a reference clock generation unit 22 for generating a first reference clock based on the reference waveform W, a data encoder 23 for encoding the data to produce the encoded data based on the first reference clock, a stream data generation unit 24 for generating the stream data from the encoded data, based on the first reference clock, and a stream data transmitting unit 25 for transmitting the stream data to the stream data receiver 30 via the asynchronous communication network 40.

The reference waveform receiving unit 21 is a tuner for receiving the reference waveform W transmitted from the receiving side antenna 12. The received wave W received by the reference waveform receiving unit 21 is passed to the reference clock generation unit 22.

The reference clock generation unit 22 generates a first reference clock (STC) that is the reference clock within the stream data transmitter 20, based on the received reference waveform W. The generated first reference clock is sent for reference to the data encoder 23 and the stream data generation unit 24.

The data encoder 23 receives the data such as video data or audio data, and encodes the data. Herein, the data encoder 23 encodes the data by appending the designation of reproduction time and decoding time, which are referenced in the stream data receiver 30, with reference to the first reference clock generated by the reference clock generation unit 22. The encoded data generated by the data encoder 23 is passed to the stream data generation unit 24.

The stream data generation unit 24 converts the encoded data into multiplexed stream data for transmission. In the stream data generation unit 24, the encoded data is divided into stream transmission packets having a fixed length, a plurality of divided packets making up the stream data for transmission. The stream data generation unit 24 appends the same identification number for the same kind of encoded data to the packet to be able to reproduce the encoded data divided on the receiver side.

Also, the stream data generation unit 24 may append a packet containing the reference time information for clock synchronization in the stream data.

The stream data transmitting unit 25 transmits each packet in the stream data generated by the stream data generation unit 24 at a regular transmission interval to the asynchronous communication network 40.

As shown in Fig. 3, the stream data receiver 30 includes a stream wave receiving part 31 for receiving the reference waveform W, a reference clock generation unit 32 for generating a second reference clock based on the reference waveform W, a stream data receiving unit 33 for receiving the stream data via the asynchronous communication network 40 from the stream data transmitting unit 20, a temporary storage part 34 for temporarily storing the received stream data, and a stream data decoder 35 for decoding the stream data based on the second reference clock.

The reference waveform receiving unit 31 is a tuner for receiving the reference waveform W transmitted from the transmitter side antenna 13. The reference waveform W received by the reference waveform receiving unit 21 is the same radio wave as the reference waveform W received by the stream data transmitter 20. The reference waveform W is sent to the reference clock generation unit 22.

The reference clock generation unit 32 generates the second. reference clock (STC) in tune with the reference clock within the stream data transmitter 20, based on the received reference waveform W. Since the first reference clock and the second reference clock are generated based on the same reference waveform W, the generated second reference clock is synchronous with the first reference clock generated by the stream data transmitter 20. And the second reference clock is sent for reference to the temporary storage part 34 and the data decoder 35.

The temporary storage part 34 temporarily stores the stream data received by the stream data receiving unit 34. Since the stream data is temporarily stored in the temporary storage part 34, it is possible to absorb variations in the delay time that may occur in transmitting the stream data via the asynchronous communication network 40, and keep the delay time from data input into the data encoder 23 to data output of the data decoder 35 constant.

The data decoder 35 takes the encoded data out of the stream data temporarily stored in the temporary storage part 34, and decodes the encoded data. Herein, the data decoder 35 decodes the data by referring to the second reference clock generated by the reference clock generation unit 32, and outputs data at a specified decoding time. The data decoded by the data decoder 35 may be reproduced at a specified reproduction time in accordance with the kind of data by a predetermined reproducer, or recorded in an information recording apparatus such as an optical disk recording apparatus. The "optical disk" may be a DVD or a so-called blue ray disk, and the optical disk recording apparatus records the information on the optical disk.

In the stream data communication system 10 of the embodiment, the stream data transmitter 20 and the stream data receiver 30 firstly receive the reference waveform W in the reference waveform receiving unit 21 and the reference waveform receiving unit 31, and generate the first reference clock and the second reference clock that are synchronized with each other based on the reference waveform W. And the stream data receiver 30 reproduces the original data from the stream data, based on the second reference clock.

As described above, in the stream data communication system 10 of the embodiment, the stream data transmitter 20 and the stream data receiver 30 receive the common reference waveform W transmitted from the reference waveform transmitter 11, and generate the first reference clock and the second reference clock as the internal clocks in accordance with the reference waveform W. Accordingly, it is possible to synchronize the internal clocks, irrespective of the delay time of data transfer in the asynchronous communication network 40. Also, the stream data receiver 30 can decode and reproduce the stream data correctly, employing the second reference clock synchronous with the first reference clock, even when the stream data in the format including the designation of reproduction time and decoding time is transmitted via the asynchronous communication network. Also, the stable data transmission and reception can be performed without causing any problems such as the data loss or a skew in reproducing the data caused by a variation in the clock inside the stream data transmitter 20 and the stream data receiver 30.

Also, if the reference waveform W is already employed wave such as BS digital broadcasting radiowave, CS digital broadcasting radiowave, digital terrestrial TV broadcasting radiowave, analog TV broadcasting radiowave, communications satellite radiowave, or AM or FM radio broadcasting radiowave, the reference waveform W is received by the stream data transmitter 20 and the stream data receiver 30 with a simple configuration to regenerate the internal clock, without , providing a specific reference waveform transmitter 11 separately.

In the embodiment, the data received by the stream data transmitter 20 is encoded to generate the stream data, which is transmitted to the stream data receiver 30, but the invention is not limited to the embodiment. For example, the stream data transmitter 20 may read the encoded data from the recording apparatus such as the hard disk where the encoded data is recorded beforehand, and transmit the data to the stream data receiver 30 with reference to the system clock. In the case, the stream data generation unit 24 provided on the stream data transmitter 20 may generate the stream data from the data previously encoded and stored in accordance with the reference clock, and transmit the generated stream data via the stream data transmitting unit 25 to the stream data receiver 30.

The specific examples of the stream data communication system according to the invention will be described below with reference to the drawings. In the following examples, the reference waveform W in the above embodiment is the radiowave for BS digital broadcasting (the radiowave hereinafter will be referred to as BS digital broadcasting radiowave).

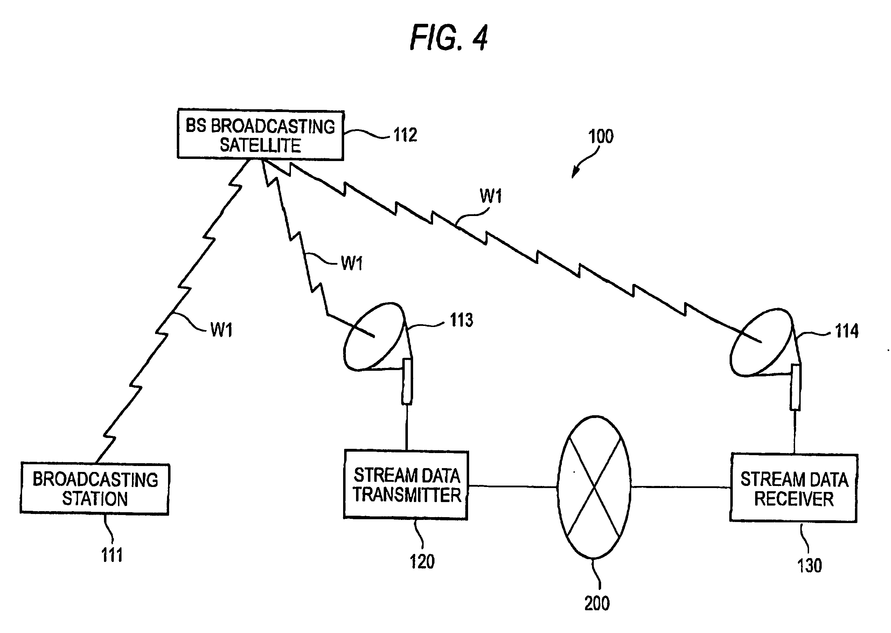

FIG. 4 is a block diagram showing the overall configuration of a stream data communication system in the example.

The stream data communication system 100 of the example includes a broadcasting station 111, a BS broadcasting satellite 112, a transmitter side antenna 113, a receiver side antenna 114, a stream data transmitter 120, and a stream data receiver 150.

The broadcasting station 111 is the general broadcasting station for making the BS broadcasting, in which a BS broadcasting radiowave W1 transmitted from the broadcasting station 111 is received via the BS broadcasting satellite 112 by the transmitter side antenna 113 and the receiver side antenna 114. The contents data of BS broadcasting radiowave W1 is distributed as the MPEG2-TS that is multiplexed and encoded.

The stream data transmitter 120 and the stream data receiver 150 are connected communicably with each other via the Internet 120 that is one of the asynchronous communication networks. These stream data transmitter 120 and the stream data receiver 150 receive the BS broadcasting radiowave W1 that is the common reference waveform, and generate the common internal clock based on the BS broadcasting radiowave W1. These stream data transmitter 120 and the stream data receiver 150 will be described below in detail.

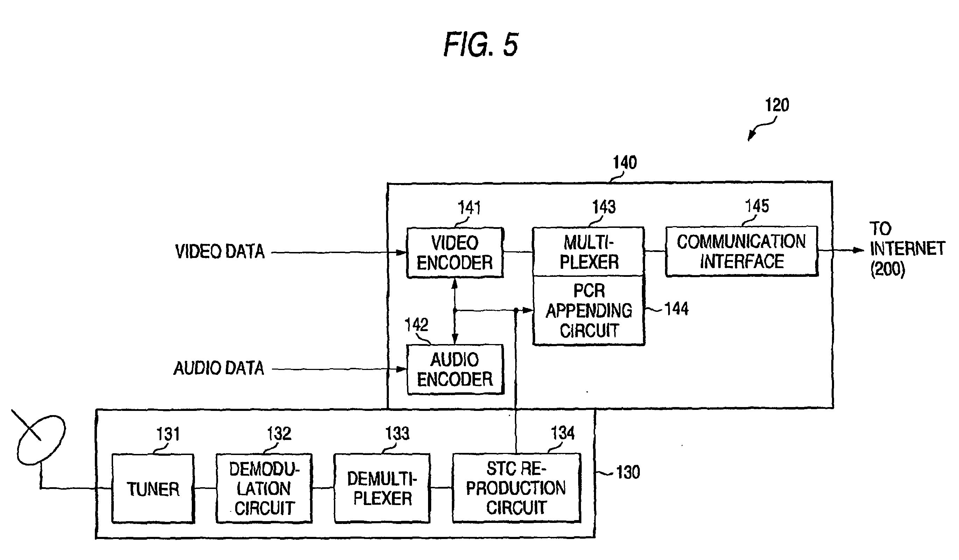

Fig. 5 is a block diagram for explaining the details of the stream data transmitter 120.

The stream data transmitter 120 includes a BS digital receiving part 130 for receiving the BS broadcasting radiowave W1 and reproducing the system clock within the stream data transmitter 120, and a network transmitting part 140 for generating the stream data and transmitting it via the Internet 200 to the stream data receiver 150.

The BS digital receiving part 130 includes a tuner 131, a demodulation circuit 132, a demultiplexer 133, and an STC reproduction circuit 134.

The tuner 131 is a circuit for tuning the receive frequency of wave received via the transmitter side antenna 113 with the frequency of the BS broadcasting radiowave W1. The BS broadcasting radiowave W1 received via the tuner 131 is demodulated by the demodulation circuit 132, and the contents data is picked up. The picked up contents data is passed to the demultiplexer 133.

The demultiplexer 133 combines the TS packets in the MPEG2-TS distributed by the BS broadcasting radiowave W1, and reproduces the meaningful PES packet such as video or audio. In the process, the demultiplexer 133 extracts the PCR from the MPEG2-TS, and transfers it to the STC reproduction circuit 134.

The STC reproduction circuit 134 regenerates the system clock, based on the PCR transferred from the demultiplexer 133. The regenerated system clock has a frequency of 27MHz, and is employed as the system clock in the network transmitting part 140.

The network transmitting part 140 is connected to the recording medium such as a hard disk or optical disk in which data is recorded, or a data collecting device (not shown) such as a broadcasting camera or highly directional microphone, in which the video data and audio data are sequentially received from the recording medium or data collecting device. The network transmitting part 140 has a video encoder 141, an audio encoder 142, a multiplexer 143, a PCR appending circuit 144, and a communication interface 145.

The video encoder 141 encodes the received video data to produce the video PES packet. The video encoder 141 appends two time stamps of PTS (Presentation Time Stamp) indicating the display time and DTS (Decoding Time Stamp) indicating the decoding time of video information in the video PES packet to each video PES packet, based on the system clock generated by the STC reproduction circuit 134. Herein, if the received video data is the encoded data (e.g., video PES packet), the encoding by the video encoder 141 is unnecessary, and data is directly output to the multiplexer 143. If it is known in advance that the encoded data is received, the video encoder 141 may be omitted.

The audio encoder 142 encodes the received audio data, and produces the audio PES packet. The audio encoder 142 appends the PTS indicating the reproduction time of audio data information in the audio PES packet to each audio PES packet, based on the system clock generated by the STC reproduction circuit 134. Herein, if the received audio data is the encoded data (e.g., audio PES packet), the encoding by the audio encoder 142 is unnecessary, and data is directly output to the multiplexer 143. If it is known in advance that the encoded data is received, the audio encoder 142 may be omitted.

The multiplexer 143 divides each of the video PES packet and audio PES packet into the TS packets to generate the MPEG2-TS, based on the divided TS packets. Herein, the multiplexer 143 appends the same PTD to the TS packets divided from the same PES packet. The multiplexer 143 passes each TS packet in the generated MPEG2-TS to the communication interface 145 at a regular timing. The communication interface 145 sequentially forwards the TS packets passed from the multiplexer 143 to perform the stream distribution.

The PCR appending circuit 144 disposed in parallel with the multiplexer 143 generates the PCR used to regenerate the clock on the receiver side, based on the system clock generated by the STC reproduction circuit 134, and appends it to the MPEG2-TS.

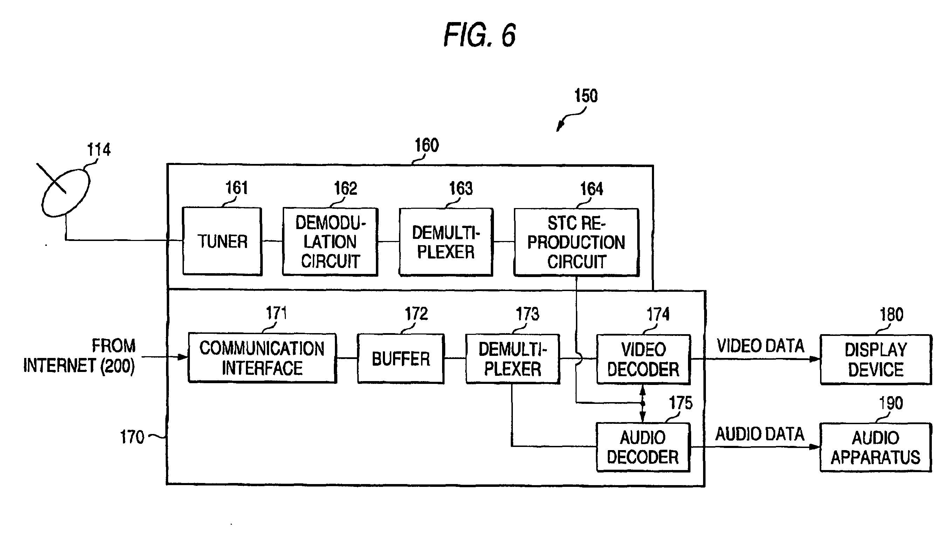

Referring to Fig. 6, the stream data receiver 150 will be described below.

Fig. 6 is a block diagram for explaining the details of the stream data receiver 150.

The stream data receiver 150 includes a BS digital receiving part 160 for receiving the BS broadcasting radiowave W1 and regenerating the system clock within the stream data transmitter 150, and a network receiving part 170 for receiving the stream data via the Internet 200 and decoding the received stream data.

The BS digital receiving part 160 includes a tuner 161, a demodulation circuit 162, a demultiplexer 163, and an STC reproduction circuit 164, and has the same configuration as the BS digital receiving part 140 of the stream data receiver 130.

The tuner 161 is a circuit for tuning the receive frequency of wave received via the receiver side antenna 114 with the frequency of the BS broadcasting radiowave W1. The BS broadcasting radiowave W1 received via the tuner 161 is demodulated by the demodulation circuit 162, and the contents data is picked up. The picked up contents data is passed to the demultiplexer 163. Herein, the picked up contents data has the same contents as the contents data picked up by the BS digital receiving part 140 of the stream data receiver 130.

The demultiplexer 163 combines the TS packets in the MPEG2-TS distributed by the BS broadcasting radiowave W1, and reproduces the meaningful PES packet such as video or audio. In the process, the demultiplexer 163 extracts the PCR from the MPEG2-TS, and transfers it to the STC reproduction circuit 164.

The STC reproduction circuit 164 regenerates the system clock, based on the PCR transferred from the demultiplexer 163. The regenerated system clock has a frequency of 27MHz, and is employed as the system clock in the network transmitting part 160. Since the regenerated system clock has the same data as the contents data picked up by the BS digital receiving part 140 of the stream data receiver 130, namely, regenerated from the same PCR, the system clock in the stream data receiver 150 is synchronous with the system clock in the stream data receiver 130.

The network transmitting part 170 is connected to the recording medium such as a hard disk or optical disk in which data is recorded, or a data collecting device (not shown) such as a broadcasting camera or highly directional microphone, in which the video data and audio data are sequentially received from the recording medium or data collecting device. The network transmitting part 170 has a communication interface 171, a buffer 172, a demultiplexer 173, a video decoder 174, and an audio decoder 175.

The communication interface 171 is the receiving part for sequentially receiving the TS packets of the MPEG2-TS transmitted from the Internet 200. The received TS packets are sequentially transferred to the buffer 172 and held in the buffer 172 by a predetermined amount or for a predetermined period of time.

The demultiplexer 173 receives the TS packets buffered in the buffer 172 at a regular timing, combines the TS packets having the same PID with each other, and reproduces the PES packet, namely, the video PES packet and the audio PES packet here. And the multiplexer 173 forwards the video PES packet and the audio PES packet to the video decoder 174 and the audio decoder 175 in accordance with the kind of PES packet.

The video decoder 174 decodes the video PES packet. The video decoder 174 performs a decoding process in accordance with the time indicated by the PTS and DTS in the video PES packet to output the video data, based on the system clock generated by the STC reproduction circuit 164. The output video data is sent, for example, to a display device 180, and displayed on the display screen of the display device 180.

The audio decoder 175 decodes the audio PES packet. The audio decoder 175 performs a decoding process in accordance with the time indicated by the PTS in the audio PES packet to output the audio data, based on the system clock generated by the STC reproduction circuit 164. The output audio data is sent, for example, to an audio apparatus 190 to reproduce the audio, for example.

In the stream data communication system 100 of the example, the stream data transmitter 120 and the stream data receiver 130 firstly receive the BS broadcasting radiowave W1 in the BS digital receiving part 130 and the BS digital receiving part 160, and generate the internal clocks synchronous with each other, based on the BS broadcasting radiowave W1. And the stream data transmitter 120 converts the video data or audio data into the stream data to be transmittable via the Internet 200, based on the generated internal clock, and transmits the converted stream data. On the other hand, the stream data receiver 130 reproduces the original video data or audio data from the stream data, based on the clock in synchronism with the stream data transmitter 120.

As described above, in the stream data communication system 100 of the example, the stream data transmitter 120 and the stream data receiver 130 receive the common BS broadcasting radiowave W1 transmitted from the broadcasting station 111, and generate the internal system clock in accordance with the BS broadcasting radiowave W1, respectively. Accordingly, it is possible to always synchronize the internal clock completely, irrespective of the length of delay time of data transfer in the Internet 200. Also, the stream data receiver 130 can decode and reproduce the stream data correctly, employing the internal clock in synchronism with the stream data transmitter 120, even when the PES packet including the PTS and DTS is transmitted via the Internet 200 as the MPEG2-TS. Consequently, the stable data transmission and reception can be performed without causing any problems such as the data loss caused by a skew of the system clock inside the stream data transmitter 120 and the stream data receiver 130, or a distortion in reproducing the data.

Also, in the example, the BS broadcasting radiowave W1 is employed as the reference waveform for generating the system clock. Since the BS broadcasting radiowave W1 is always transmitted as the public broadcasting radiowave, no special apparatus for receiving the BS broadcasting radiowave is required, and the existent BS broadcasting receiving circuit currently available may be appropriated to constitute the stream data transmitter and the stream data receiver. Also, when the stream data transmitter-receiver is developed based on the existent stream data transmitter-receiver in which the BS broadcasting receiving circuit is already mounted, the stream data transmitter and receiver of the example is constructed only by simply changing the circuit, reducing the development cost.

Though in the example, the BS broadcasting radiowave is employed, the invention is not limited thereto. For example, the CS digital broadcasting radiowave, digital terrestrial TV broadcasting radiowave, analog TV broadcasting radiowave, communications satellite wave, or AM or FM radio broadcasting radiowave may be employed.

Though in the example, the clock is synchronized between the stream data transmitter 120 and the stream data receiver 130 by the above method, the invention is not limited to the TS packets having a fixed length for transmission, but may be applicable to various kinds of packet communications. For example, the data may be transmitted or received, employing the PS or PES, while the clock is synchronized between the stream data transmitter 120 and the stream data receiver 130.

Although the present invention has been shown and described with reference to a specific preferred embodiment, various changes and modifications will be apparent to those skilled in the art from the teachings herein. Such changes and modifications as are obvious are deemed to came within the spirit, scope and contemplation of the invention as defined in the appended claims.

## Claims

1. A stream data transmitter for transmitting stream data to a receiver, the stream data transmitter comprising:
a reference waveform receiving unit that receives a reference waveform in which the receiver receives;
a reference clock generation unit that generates a reference clock based on the reference waveform, the reference clock being in synchronism with a reference clock in which the receiver generates; and
a stream data transmitting unit that transmits the stream data via an asynchronous communication network to the receiver, based on the reference clock generated by the reference clock generation unit.

2. The stream data transmitter according to claim 1, further comprising a stream data generation unit that generates the stream data from data previously encoded and stored,
wherein the stream data transmitting unit transmits the stream data generated by the stream data generation unit.

3. The stream data transmitter according to claim 1, further comprising:
a data encoder that encodes data based on the reference clock to produce encoded data; and
a stream data generation unit that generates the stream data from the encoded data produced by the data encoder,
wherein the stream data transmitting unit transmits the stream data generated by the stream data generation unit.

4. The stream data transmitter according to claim 1, wherein the reference waveform is at least one of digital broadcasting radiowave, digital terrestrial television broadcasting radiowave, analog television broadcasting radiowave, radiowave provided by a communications satellite, or radio broadcasting radiowave.

5. A stream data receiver for receiving stream data from a transmitter, the stream data receiver comprising:
a reference waveform receiving unit that receives a reference waveform in which the transmitter receives;
a reference clock generation unit that generates a reference clock based on the reference waveform, the reference clock being in synchronism with a reference clock in which the transmitter generates;
a stream data receiving unit that receives the stream data via an asynchronous communication network from the transmitter; and
a stream data decoder that decodes the stream data received by the stream data receiving unit based on the reference clock generated by the reference clock generation unit.

6. The stream data receiver according to claim 5, wherein the reference waveform is at least one of digital broadcasting radiowave, digital terrestrial television broadcasting radiowave, analog television broadcasting radiowave, radiowave provided by a communications satellite, or radio broadcasting radiowave.

7. A stream data communication system comprising a stream data transmitter and a stream data receiver, both of which being communicably connected with each other via an asynchronous communication network,
wherein the stream data transmitter includes:
a first reference waveform receiving unit that receives a reference waveform;
a first reference clock generation unit that generates a first reference clock based on the reference waveform; and
a stream data transmitting unit that transmits the stream data via the asynchronous communication network to the stream data receiver, based on the first reference clock generated by the first reference clock generation unit, and
wherein the stream data receiver includes:
a second reference waveform receiving unit that receives the reference waveform;
a second reference clock generation unit that generates a second reference clock based on the reference waveform, the second reference clock being in synchronism with the first reference clock;
a stream data receiving unit that receives the stream data via the asynchronous communication network from the stream data transmitting unit; and
a stream data decoder that decodes the stream data received by the stream data receiving unit based on the second reference clock generated by the second reference clock generation unit.

8. A stream data communication method for transmitting and receiving stream data between a stream data transmitter and a stream data receiver that are communicably connected with each other via an asynchronous communication network, the method comprising:
receiving a reference waveform in the stream data transmitter;
generating a first reference clock based on the reference waveform in the stream data transmitter;
receiving the reference waveform in the stream data receiver;
generating a second reference clock based on the reference waveform in the stream data receiver, the second reference clock being in synchronism with the first reference clock;
generating the stream data from data based on the first reference clock in the stream data transmitter;
transmitting the stream data from the stream data transmitter to the stream data receiver via the asynchronous communication network; and
reproducing the data from the stream data based on the second reference clock in the stream data receiver.

9. A stream data transmitting method for transmitting stream data to a receiver, the method comprising:
receiving a reference waveform in which the receiver receives;
generating a reference clock based on the reference waveform, the reference clock being in synchronism with a reference clock in which the receiver generates; and
transmitting the stream data via an asynchronous communication network to the receiver, based on the reference clock.

10. A stream data receiving method for receiving stream data from a transmitter, the method comprising:
receiving a reference waveform in which the transmitter receives;
generating a reference clock based on the reference waveform, the reference clock being in synchronism with a reference clock in which the transmitter generates;
receiving the stream data via an asynchronous communication network from the transmitter; and
decoding the stream data based on the reference clock.
